# EUROPEAN PATENT SPECIFICATION

(11) **EP 0 897 082 B1**
(45) Date of publication and mention of the grant of the patent: **14.01.2004**
(21) Application number: 98306478.3
(22) Date of filing: 14.08.1998
(51) Int. Cl.: F16L 47/06, F16L 37/084

(54) **Push fit tube couplings**
Steckrohrverbindung
Accouplements de tubes par montage à frottement doux

(30) Priority: 14.08.1997 GB 9717275
(43) Date of publication of application: 17.02.1999
(73) Proprietor: Marley Tile AG, 6006 Lucerne (CH)
(72) Inventor: Dudley, Steven John, Brighton East Sussex BN1 3BD (GB)
(74) Representative: Butler, Michael John

(56) References cited:
- WO-A-94/25786
- WO-A-97/03314
- DE-A- 3 303 434
- GB-A- 2 060 106
- US-A- 5 172 940

## Description

This invention relates to couplings for tubes such as pipes or hoses and in particular, but not exclusively, to push-fit pipe couplings for use with plumbing systems. Such couplings usually include a seal and gripping means for the tube.

A common type of push-fit pipe coupling is disclosed in GB-A-2 071 798. This type of coupling has a plastic body which defines a socket portion containing a grip ring and a seal which are kept within the socket by means of a threaded plastic end cap. A problem with this type of coupling is that to achieve the required strength the plastic body and end cap have to be of a thickness which makes the coupling bulky.

GB-A-2 155 576 discloses a tube coupling in which in place of a plastic end cap to retain components within the socket portion there is provided a metal end cap. This includes a thin metal sleeve on the exterior of the coupling which has a rolled over bead at its inner edge. This is engaged in an annular groove around the exterior of the coupling, approximately mid-way along the socket portion containing the seal and the grip ring. This is said to ensure an overall diameter which is appreciably less than with a plastic end cap, whilst the bead provides added hoop strength. A problem with this arrangement is that the groove in the relatively thin plastic wall is a point of weakness. Furthermore, the metal sleeve provides reinforcement over less than half of the socket portion containing the seal and the grip ring.

In GB-A-2 292 780 there is disclosed a pipe coupling using a metal sleeve which holds in shape a radially collapsible socket portion formed from a number of fingers. The sleeve snaps onto the body by means of outwardly projecting lugs on the outer ends of some of the fingers which extend through apertures in the sleeve. This arrangement is complex and unlikely to be sufficiently secure, the small number of lugs having to withstand high axial forces.

GB-A-2 143 918 discloses another pipe coupling which uses a metal sleeve in place of a plastic end cap. In this coupling the grip ring is integral with the metal sleeve. The metal sleeve is provided with inwardly projecting means which are said to engage a circumferential shoulder on the outside of the socket or one side of a groove around the socket. The inwardly projecting means may be in the form of dimples, tabs or a continuous rim rolled inwardly at the end of the skirt. The sleeve extends over the whole of the socket portion containing the seal. It is stated that the shoulder or groove should be axially inwards of this socket portion, so as to maximise the socket thickness at this point. This avoids the problem with GB-A-2 155 576. However, the particular design illustrated is cumbersome.

In EP-A-0 696 342 there is shown another coupling which uses a metal sleeve in place of a plastic end cap. As in GB-A-2 143 918 it extends over the entire length of the socket portion containing the sleeve and grip ring, and engages over a shoulder which is axially inwards of this socket portion. The sleeve is provided with a continuous flange at its end to engage the shoulder. The coupling has two ends, each provided with a shoulder at the end of the socket portion containing the respective seals and grip rings. In the arrangement shown, the plastic body between the two shoulders is cut away so as to provide a central region which is of reduced cross section, giving a more conventional appearance than the coupling of GB-A-2 143 918.

In WO 97/03314, in Figure 10, there is also disclosed a pipe coupling which uses a metal sleeve in place of a plastic end cap. As in GB-A-2 143 918 and EP-A-0 696 342 this sleeve engages over a shoulder which is axially inwards of the socket portion containing the seal and grip ring. The external profile of the coupling is of generally conventional appearance, with a reduced diameter central portion. In WO 94/25786 there is disclosed a system having a plastic end cap and a metallic sleeve. The sleeve engages over a shoulder which is axially inwards of the socket portion containing the seal and grip ring.

There are disadvantages with the means of fixing the sleeves in EP-A-0 696 342, WO 94/25786 and WO 97/03314. The metal reinforcing sleeve terminates just where the body of the fitting reduces in diameter. Under conditions of increased temperature and pressure, the larger diameter portion of the coupling will remain constrained by the metal reinforcing sleeve, but the reduced diameter portion will tend to expand. Contact between this expanding portion and the free, relatively sharp, edge of the reinforcing sleeve will tend to put extreme stresses on the sleeve, causing premature weakening and failure of sleeve.

In DE-A-3303434 the wall of a coupling is deformed so as to provide an inwardly directed groove which can receive a sealing ring in an axially fixed manner. This deformation provides a ridge on the outside of the coupling. A metal sleeve is placed over the ridge so as to reinforce the coupling in this region.

In accordance with the present invention there is provided a tube coupling comprising a plastic body defining a socket for receiving a tube, means for gripping the tube, a seal within a part of the socket which is of uniform internal diameter, and a metal reinforcing sleeve on the outside of the body extending over the part of the socket which is of uniform internal diameter, characterised in that the part of the socket which is of uniform internal diameter is provided with an annular outwardly projecting locating ridge provided by an increased wall thickness of plastic relative to the remainder of that part of the socket, and in that the sleeve is provided with a corresponding annular outwardly projecting locating portion whose inner side defines a recess which receives the ridge.

By locating the reinforcing sleeve over a annular ridge, there is no weakening of the body of the coupling by the use of a groove. The engagement of the sleeve and body takes place over an annular region providing a more secure location than if individual tabs or lugs are used. The reinforcing sleeve need only be as long as is necessary to provide the required reinforcing function, and does not have to engage over the shoulder provided axially outer bore part. In the preferred embodiment the step in the bore serves to locate the seal, and the gripping means is positioned axially outwardly of the seal. However, the invention is applicable to other arrangements, such as those with the seal and gripping means in the reverse axial order.

The metal sleeve may serve only to reinforce the coupling. However, preferably it also contributes to retaining components axially within the coupling. It is therefore preferably turned in at the insertion end of the coupling. The turned in metal portion may serve directly to retain a seal and gripping means within the coupling. It may be of the form shown in WO 97/03314, and also act as a camming surface to urge the grip ring into engagement with the tube. Alternatively, it may serve to locate a plastic retaining ring which in turn holds the gripping means and seal within the coupling. A plastic retaining ring portion may be fixed to the metal, for example by co-moulding. In another arrangement the turned in portion of the sleeve may serve as gripping means and hold a seal in place.

In the preferred embodiments the sleeve is used in the context of a releasable coupling as disclosed in WO 97/03314.

In a preferred form of constructing the coupling, the metal reinforcing sleeve, which is preferably of stainless steel but may be manufactured from another suitable metal, is spun onto the main body of the coupling and is located over the annular ridge by a known rolling method. When rolling the metal cap over the ridge, some space is required behind the ridge to accommodate the rolling head. Whilst this does not cause a problem for straight couplings, if the coupling involves a bend, e.g. an elbow joint or a T joint, then the minimum length of the 'legs' of the joint is constrained by this need to provide sufficient space for the rolling head. By providing the ridge well spaced away from the transition to the smaller diameter, the point at which the rolling head must move radially inwardly and also the end of the sleeve occur closer to the insertion end of the coupling. Thus, as compared to tube couplings in which a metal sleeve is rolled over the transition between larger and smaller diameter portions, the leg length may be shortened since it is no longer necessary for the rolling head to have access as far along the coupling.

The coupling may be constructed and assembled in other ways, for example by the sleeve forming a snap fit with the body.

The ridge may have a number of profiles. It may be of essentially rectangular cross-section with sides which project radially from the coupling. It could have a curved or triangular profile and in the preferred embodiments has a generally truncated triangular profile. Preferably the forward edge of the annular ridge is inclined with respect to the radial and axial directions. Thus, it may be inclined at between 20° and 40°, and preferably at about 30° to the axial direction. Preferably the trailing edge is inclined, either in addition to or in place of the forward edge. This may be by the same amount, but preferably there is a greater angle for the trailing edge to aid retention of the sleeve in the forward direction. The angle may be between 40° and 50°, and most preferably 45°, with respect to the axial direction. To avoid having a sharp point, the forward and trailing edges preferably to do not meet as such, and there is an intermediate portion which may be flat, or even curved somewhat.

In the case of a coupling having a generally conventional profile, with a larger diameter portion joined by a shoulder to a smaller diameter portion, the ridge will be spaced axially forwards of the shoulder. However, the ridge is preferably positioned more than a third to halfway along the larger diameter body portion from the insertion end of the socket. In an arrangement with a stepped bore, the ridge is preferably positioned axially forwards of the internal step. In a preferred embodiment, with respect to the overall length of a larger diameter external portion the ridge is spaced at least 25% axially forwards of the external shoulder, and preferably at least 30%.

The radial extent of the ridge must be sufficient to provide secure location of the sleeve, although not so great as to cause production difficulties or to increase the overall diameter of the coupling excessively. In a typical embodiment the radial extent of the ridge may be in the region of 2.5% to 7.5% of the external diameter of the larger diameter body portion, and in one preferred embodiment in the region of 5%.

Whilst the annular ridge and the corresponding annular locating portion are preferably continuous, they may be intermittent in the circumferential direction. The ridge could be intermittent whilst the locating portion on the sleeve is continuous.

Whilst the present invention may be applied to any suitable tube coupling, the preferred embodiments disclosed below are of a coupling which is releasable, using a separate release tool as shown in WO 97/03314. The internal configuration of the preferred embodiments is as disclosed in WO 97/03314, the contents of which are incorporated herein by way of reference.

The invention extends also to a method of manufacturing the coupling, comprising the steps of providing the body and the sleeve, and urging the sleeve onto the body so that the locating portion locates over the ridge. In the preferred embodiments this will be performed after other components such as the seal and gripping ring have been positioned within the body. The locating portion of the sleeve may be at least partly pre-formed before it is attached to the body. Alternatively the locating portion may be formed entirely by deforming a cylindrical sleeve over the ridge.

Two preferred embodiments of the present invention will now be described, by way of example only, with reference to the accompanying drawings in which:
Fig. 1 is an external view of one end of a first embodiment of a push-fit tube coupling in accordance with the present invention;
Fig. 2 shows a cross-section through the coupling of Fig. 1;
Fig. 3 shows the cross-section of Fig. 2 having a tube received therein;
Fig. 4 shows a cross-section through a coupling in accordance with a second embodiment of the invention; and

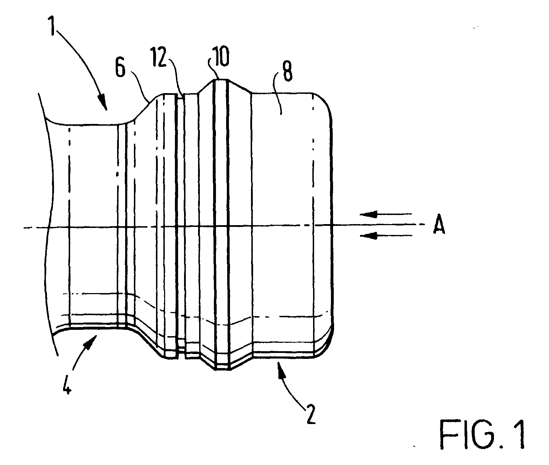

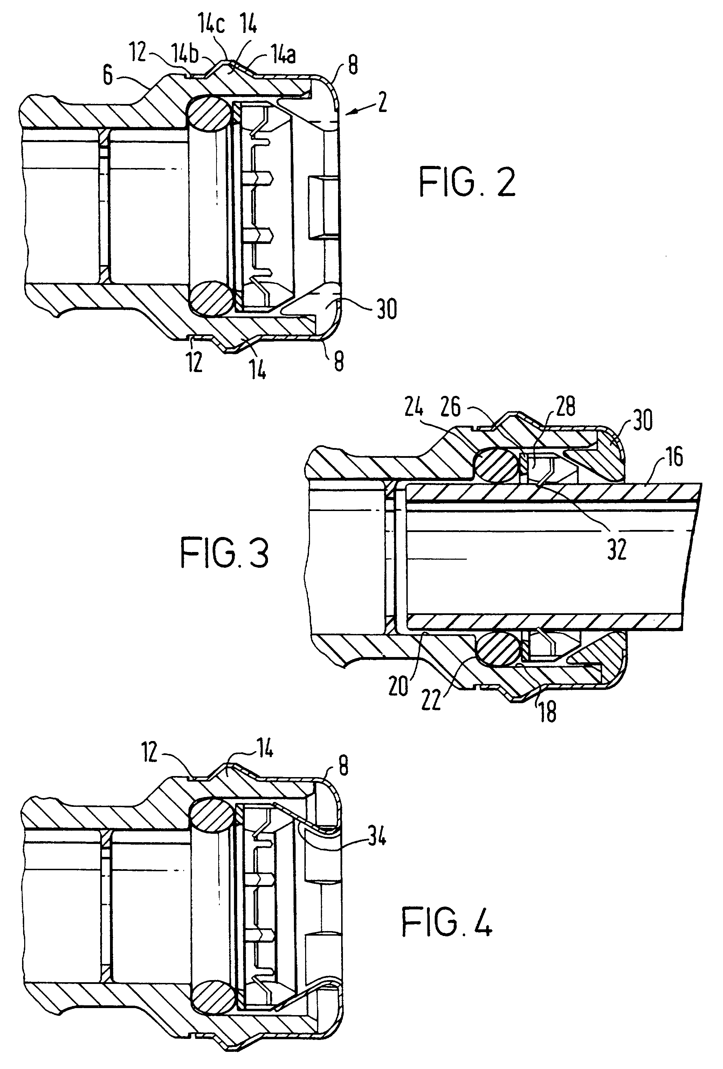

Turning to Fig. 1, there is shown part of a pipe coupling 1 which comprises a plastic body having a larger diameter portion 2 and a smaller diameter portion 4 interconnected by a transition 6. Only one end of the coupling is shown. The other end corresponds and the coupling may be a straight coupling or for example an elbow or T piece. In use, a cylindrical pipe is inserted into the coupling along the axis A in the direction of the arrows (see Fig. 3).

Part of the larger diameter portion 2 of the body is covered with a metal reinforcing sleeve 8, of stainless steel or another suitable metal. This sleeve is profiled outwardly at 10 so as to conform to an annular ridge which projects outwardly from the larger diameter portion 2. The sleeve projects axially inwardly from the ridge to a free end 12 which is spaced from the transition 6 between the larger diameter portion 2 and the smaller diameter portion 4.

In Fig. 2, there is shown a cross-sectional view of the coupling shown in Fig. 1 from which the metal sleeve 8 may be seen more clearly fitted over the annular ridge 14 so as to conform to it. The ridge 14 is continuous around the circumference of the coupling and has a generally truncated triangular shape. The leading edge 14a of the ridge is inclined at an angle of 30° to the axial direction, whilst the trailing edge 14b is inclined at an angle of 45°. The radially outermost flat portion 14c of the ridge is approximately 1mm long. The height of the ridge 14 above the larger diameter portion of the body 2 of the coupling is 1.3mm, the diameter of the portion 2 being about 26mm. The ridge 14 is located approximately 65% along the larger diameter portion 2 from the front of the coupling. The length of the body portion 2 from the insertion end of the coupling to the transition 6 is about 17mm. The dimensions given here relate to a coupling to be used with a "15mm" plumbing system. The measurements will thus change appropriately for other systems e.g. a "22mm" system.

The metal sleeve 8 is fitted to the plastics body of the coupling as follows. The sleeve 8 is pre-formed away from the coupling body to have a step in diameter. A part of the sleeve extending from the eventual free end 12 has a diameter which corresponds generally to the outer diameter of the ridge 14. The diameter of the pre-formed sleeve then steps down to a diameter corresponding generally to that of the portion 2 of the coupling body. The end of the pre-formed sleeve with the greater diameter is slid over the coupling until the leading edge 14a of the annular ridge on the coupling abuts the step down in diameter on the sleeve. The free end 12 of the sleeve is then rolled around the trailing edge 14b of the ridge and then partially along the body portion 2 towards the transition 6 so that the sleeve 8 conforms to the shape of the ridge 14. The other end of the sleeve 8 is pre-formed with an inward flange to hold in a retaining cap 30 which retains the internal components of the coupling (described below). As can be seen, in applying the sleeve 8 to the coupling, the metal rolling head only needs access as far as the end 12 of the sleeve, rather than the transition 6, thus allowing the leg length of angled couplings such as elbows to be shorter.

Turning to Fig. 3, there is shown a cross-section of the coupling as in Fig. 2, except that the coupling is shown with a plastics tube 16 in it. Inside the coupling, there is a stepped bore. A larger diameter portion 18 of the bore is connected to a smaller diameter portion 20 by a step 22. The smaller diameter portion is adapted to receive a pipe in a reasonably close fitting manner. In the larger diameter portion 18 of the bore, there are arranged coaxially, in order from the step 22, an O-ring seal 24, a washer 26, an axially movable split ring 20 and a retaining cap 30.
As mentioned above, the retaining cap 30 is secured to the body by means of the metal sleeve 8. The split ring 20 has a plurality of teeth 32 around its circumference which grip the tube 16. The split ring 28 and retaining cap 30 are provided with corresponding frusto-conical camming surfaces to close the split ring 28 down onto the pipe 16 to grip it under pressure in the coupling. A second frusto-conical surface is provided on the split ring 28 for releasing the grip of the split-ring upon the axial insertion of a suitable tool. A full description of these internal components of the coupling is given in WO 97/03314

Fig. 4 shows a cross-section through a second embodiment of the invention. This coupling of this embodiment differs from that of Figs. 1 to 3 in that an end 34 of the metal sleeve opposite the end 12 is extended round inside the coupling to retain the internal components of the coupling inside. This obviates the need for a separate retaining ring, although one may still be provided to provide extra rigidity to the turned over end 34 of the sleeve.

The metal sleeve 8 is retained to the coupling 1 in exactly the same as in the previous embodiment, i.e. by being fitted over the annular ridge 14. Whilst the need to pre-form the other end of the metal sleeve inside the coupling makes its manufacture slightly more complicated, this disadvantage can be offset by the fact that a separate retaining ring is not necessary making it less difficult to hold the components together before the application of the metal sleeve 8. There are also reduced cost implications of using fewer components.

It will be appreciated by those skilled in the art that whilst the basic inventive concept has been described herein with reference to a particular type of tube coupling, it is equally applicable to many other types of coupling which require reinforcement, and is thus particularly suited to any type of plastics coupling upon which it is desired to apply a metal reinforcing sleeve.

## Claims

1. A tube coupling comprising a plastic body defining a socket (2) for receiving a tube (16), means (28,32) for gripping the tube, a seal (24) within a part of the socket (2) which is of uniform internal diameter, and a metal reinforcing sleeve (8) on the outside of the body extending over the part of the socket which is of uniform internal diameter, **characterised in that** the part of the socket which is of uniform internal diameter is provided with an annular outwardly projecting locating ridge (14) provided by an increased wall thickness of plastic relative to the remainder of that part of the socket, and **in that** the sleeve (8) is provided with a corresponding annular outwardly projecting locating portion whose inner side defines a recess which receives the ridge (14).

2. A tube coupling as claimed in claim 1, wherein the sleeve (8) extends axially inwards beyond its locating portion.

3. A tube coupling as claimed in claim 1 or 2 comprising a larger outer diameter socket portion (2) extending axially inwards from the insertion end of the coupling to a shoulder (6), and a reduced outer diameter second socket portion (4) extending axially inwards from said shoulder, the annular ridge (14) being formed on the larger diameter socket portion (2), axially spaced from the shoulder (4).

4. A tube coupling as claimed in claim 3 in which the internal configuration of the body defines a stepped bore (22), having an axially inner part (20) which is arranged to receive the end of a tube (16), and an axially outer part (18) of larger diameter which contains the seal (24) and gripping means (28,32) and which is within the limits of the larger outer diameter socket portion (2), wherein the annular ridge (14) is formed within the axial extent of the axially outer part (18) of the stepped bore.

5. A tube coupling as claimed in claim 4, wherein the sleeve (8) extends over at least the axial extent of the axially outer part (18) of the stepped bore.

6. A tube coupling as claimed in any preceding claim wherein the metal sleeve (8) has a radially inwardly directed portion (34) at the insertion end of the coupling.

7. A tube coupling as claimed in claim 6, wherein the inwardly directed portion (34) of the sleeve serves to retain the seal (24) and gripping means (28,32) within the coupling.

8. A tube coupling as claimed in claim 7, wherein the inwardly directed portion of the sleeve (34) serves to locate a plastic retaining ring (30) which in turn holds the seal (24) and gripping means (28,32) within the coupling.

9. A tube coupling as claimed in any preceding claim, wherein the annular ridge (14) is positioned axially outwardly of the seal (24).

10. A tube coupling as claimed in any preceding claim wherein the annular ridge (14) has its forward (14a) and/or trailing (14b) edge inclined with respect to the axial direction.

11. A tube coupling as claimed in claim 10 wherein the annular ridge (14) has both its forward (14a) and trailing (14b) edges inclined with respect to the axial direction, the angle of inclination of the trailing edge (14b) exceeding that of the forward edge (14a).

12. A tube coupling as claimed in any preceding claim wherein the annular ridge (14) has a truncated triangular profile.

## Patentansprüche

1. Röhrenkopplung mit einem Plastikkörper, der eine Buchse bzw. einen Sockel (2) definiert, um eine Röhre (16) aufzunehmen, Mittel (28, 32) zum Greifen bzw. Einspannen der Röhre, einem Siegel bzw. einer Abdichtung (24) in einem Teil des Sockels (2), der einen gleichmäßigen Innendurchmesser aufweist, und einer metallverstärkte Hülse bzw. Buchse (8) an der Außenseite des Körpers, die sich über den Teil des Sockels erstreckt, der den gleichmäßigen Innendurchmesser aufweist, **dadurch gekennzeichnet, daß** der Teil des Sockels, der den gleichmäßigen Innendurchmesser aufweist, mit einer ringförmigen nach außen vorspringenden Halterippe bzw. Haltekante (14) versehen ist, die durch eine verstärkte Wanddicke des Plastiks im Verhältnis zu dem Rest des Teils des Sockels vorgesehen ist, und daß die Hülse (8) mit einem entsprechenden ringförmigen nach außen vorstehenden Halteabschnitt versehen ist, dessen innere Seite eine Aushöhlung definiert, die die Rippe (14) aufnimmt.

2. Röhrenkopplung nach Anspruch 1, bei der die Hülse (8) sich axial nach innen über deren Halteabschnitt erstreckt.

3. Röhrenkopplung nach Anspruch 1 oder 2, mit einem Sockelabschnitt (2) mit einem größeren Außendurchmesser, der sich axial nach innen von dem Einsatzende der Kopplung zu einer Schulter (6) erstreckt und einem zweiten Sockelabschnitt (4) mit einem reduzierten Außendurchmesser, der sich axial nach innen von der Schulter erstreckt, wobei die ringförmige Rippe (14) auf dem Sockelabschnitt (2) mit dem größeren Durchmesser axial beabstandet von der Schulter (4) gebildet ist.

4. Röhrenkopplung nach Anspruch 3, bei der die innere Konfiguration des Körpers eine Stufenbohrung (22) definiert mit einem axial inneren Teil (20), der angeordnet ist, das Ende der Röhre (16) aufzunehmen, und einem axial äußeren Teil (18) mit größerem Durchmesser, der das Siegel (24) und Greifmittel (28, 32) enthält und der innerhalb der Grenzen des Sockelabschnitts (2) mit dem größeren Außendurchmesser ist, wobei die ringförmige Rippe (14) in der axialen Ausdehnung des axial äußeren Teils (18) der Stufenbohrung ist.

5. Röhrenkupplung nach Anspruch 4, bei der die Hülse (8) sich über zumindest die axiale Ausdehnung des axial äußeren Teils (18) der Stufenbohrung erstreckt.

6. Röhrenkopplung nach einem der vorstehenden Ansprüche, bei der die Metallhülse (8) einen radial nach innen gerichteten Abschnitt (34) bei dem Einsatzende der Kopplung hat.

7. Röhrenkopplung nach Anspruch 6, bei der der nach innen gerichtete Abschnitt (34) der Hülse dazu dient, das Siegel (24) und die Greifmittel (28, 32) innerhalb der Kopplung zu halten.

8. Röhrenkopplung nach Anspruch 7, bei der der nach innen gerichtete Abschnitt der Hülse (34) dazu dient, einen Plastikhaltering (30) zu lokalisieren, der wiederum das Siegel (24) und die Greifmittel (28, 32) innerhalb der Kopplung hält.

9. Röhrenkopplung nach einem der vorstehenden Ansprüche, bei der die ringförmige Rippe (14) axial nach außen von dem Siegel (24) positioniert ist.

10. Röhrenkopplung nach einem der vorstehenden Ansprüche, bei der die vordere (14a) und/oder hintere (14b) Kante der ringförmigen Rippe in Bezug zu der axialen Richtung abgeschrägt bzw. geneigt ist.

11. Röhrenkopplung nach Anspruch 10, bei der sowohl die vordere (14a) als auch hintere (14b) Kante der ringförmigen Rippe (14) in Bezug zu der axialen Richtung abgeschrägt ist, wobei der Abschrägwinkel der hinteren Kante (14b) größer ist als derjenige der vorderen Kante (14a).

12. Röhrenkopplung nach einem der vorstehenden Ansprüche, bei der die ringförmige Rippe (14) ein abgestumpftes dreieckiges Profil aufweist.

## Revendications

1. Couplage de tubes comprenant un corps en plastique définissant un manchon (2) pour recevoir un tube (16), des moyens (28, 32) pour saisir le tube, un joint (24) à l'intérieur d'une partie du manchon (2) qui possède un diamètre interne uniforme et une manche de renforcement en métal (8) à l'extérieur du corps s'étendant sur la partie du manchon qui a un diamètre interne uniforme, **caractérisé en ce que** la partie du manchon qui a un diamètre interne uniforme est équipée d'une arête de placement annulaire faisant saillie vers l'extérieur (14) fournie par une épaisseur de paroi renforcée relativement au reste de cette partie de manchon, et **en ce que** la manche (8) est équipée d'une portion de placement annulaire correspondante faisant saillie vers l'extérieur, dont le côté interne définit un renfoncement qui reçoit l'arête (14).

2. Couplage de tubes selon la revendication 1, dans lequel la manche (8) s'étend de manière axiale vers l'intérieur au-delà de sa portion de placement.

3. Couplage de tubes selon la revendication 1 ou 2, comprenant une portion de manchon de diamètre externe plus grand (2) s'étendant de manière axiale vers l'intérieur à partir de l'extrémité d'insertion du couplage jusqu'à un épaulement (6), et une deuxième portion de manchon à diamètre externe réduit (4) s'étendant de manière axiale vers l'intérieur à partir de ladite épaule, l'arête annulaire (14) étant formée sur la portion de manchon à diamètre plus grand (2) espacée de l'épaulement (4) de manière axiale.

4. Couplage de tubes selon la revendication 3, dans lequel la configuration interne du corps définit un alésage échelonné (22), ayant une partie interne axiale (20) qui est agencée de façon à recevoir un tube (16), et une partie externe axiale (18) de diamètre plus grand qui contient le joint (24) et des moyens de saisie (28, 32) et qui est comprise dans les limites de la portion de manchon de diamètre plus grand (2), dans laquelle l'arête annulaire (14) est formée à l'intérieur de l'extension axiale de la partie externe axiale (18) de l'alésage échelonné.

5. Couplage de tubes selon la revendication 4, dans lequel la manche (8) s'étend sur au moins l'extension axiale de la partie externe axiale (18) de l'alésage échelonné.

6. Couplage de tubes selon l'une quelconque des revendications précédentes, dans lequel la manche en métal (8) possède une portion radiale dirigée vers l'intérieur (34) au niveau de l'extrémité d'insertion du couplage.

7. Couplage de tubes selon la revendication 6, dans lequel la portion dirigée vers l'intérieur (34) de la manche sert à retenir le joint (24) et les moyens de saisie (28, 32) à l'intérieur du couplage.

8. Couplage de tubes selon la revendication 7, dans lequel la portion de la manche dirigée vers l'intérieur (34) sert à placer un anneau de retenue en plastique (30) qui à son tour maintient le joint (24) et les moyens de saisie (28, 32) à l'intérieur du couplage.

9. Couplage de tubes selon l'une quelconque des revendications précédentes, dans lequel l'arête annulaire (14) est positionnée de façon axiale vers l'extérieur du joint (24).

10. Couplage de tubes selon l'une quelconque des revendications précédentes, dans lequel l'arête annulaire (14) a sont bord avant (14a) et/ ou son bord de fuite (14b) incliné par rapport à la direction axiale.

11. Couplage de tubes selon la revendication 10, dans lequel l'arête annulaire (14) a à la fois son bord avant (14a) et son bord de fuite (14b) inclinés par rapport à la direction axiale, l'angle d'inclinaison du bord de fuite (14b) dépassant celui du bord avant (14a).

12. Couplage de tubes selon l'une quelconque des revendications précédentes, dans lequel l'arête annulaire (14) a un profil triangulaire tronqué.
